# EUROPÄISCHE PATENTSCHRIFT

(11) **EP 0 974 005 B1**
(45) Veröffentlichungstag und Bekanntmachung des Hinweises auf die Patenterteilung: **27.08.2003**
(21) Anmeldenummer: 99934225.6
(22) Anmeldetag: 19.01.1999
(51) Int. Cl.: F02M 37/10, F02M 69/54

(54) **KRAFTSTOFF-FÖRDERMODUL FÜR EINE BENZINDIREKTEINSPEISUNG EINER BRENNKRAFTMASCHINE MIT EINEM VENTIL**
FUEL SUPPLY MODULE WITH A VALVE FOR GASOLINE DIRECT INJECTION IN AN INTERNAL COMBUSTION ENGINE
MODULE D'ALIMENTATION EN CARBURANT A SOUPAPE POUR DISPOSITIF D'INJECTION DIRECTE D'ESSENCE MONTE DANS UN MOTEUR A COMBUSTION INTERNE

(30) Priorität: 09.02.1998 DE 19805070
(43) Veröffentlichungstag der Anmeldung: 26.01.2000
(73) Patentinhaber: ROBERT BOSCH GMBH, 70442 Stuttgart (DE)
(72) Erfinder: Frank, Kurt, 73614 Schorndorf (DE); Strohl, Willi, 71717 Beilstein (DE)
(74) Vertreter: Isenbruck, Günter, Dr.
(86) Internationale Anmeldenummer: DE9900110
(87) Internationale Veröffentlichungsnummer: WO99040313

(56) Entgegenhaltungen:
- EP-A- 0 585 810
- US-A- 4 426 978
- US-A- 4 543 935
- US-A- 5 706 785
- PATENT ABSTRACTS OF JAPAN vol. 014, no. 375 (M-1010), 14. August 1990 & JP 02 136561 A (YAMAHA MOTOR CO LTD), 25. Mai 1990

## Beschreibung

### Stand der Technik

Die Erfindung betrifft ein Kraftstoff-Fördermodul für eine Benzindirekteinspeisung einer Brennkraftmaschine eines Kraftfahrzeuges. Das Kraftstoff-Fördermodul weist eine Elektrokraftstoffpumpe und ein mit einer Druckleitung der Elektrokraftstoffpumpe verbundenes Ventil auf. Das Ventil hat einen ersten Raum, durch den Kraftstoff von der Druckleitung zur Brennkraftmaschine hin strömen kann. Bekannt sind Kraftstoff-Fördermodule, die mit einem konstanten Systemdruck arbeiten. Ein derartiges Kraftstoff-Fördermodul geht beispielsweise aus der DE 42 42 242 A1 hervor. Die dortige Elektrokraftstoffpumpe ist mit einer Kraftstoffversorgungsleitung verbunden. Der zu dieser Leitung strömende Kraftstoffstrom wird über einen Druckregler beeinflußt. Dieser kann als einen Referenzwert zur Regelung den Umgebungsdruck aufnehmen. Bei Druckänderung im System erlaubt der Druckregler, daß ein Teil des Kraftstoffstromes aus der Kraftstoffversorgungsleitung wieder zurückgeführt wird zur Elektrokraftstoffpumpe, beispielsweise mit Hilfe einer Saugstrahlpumpe. Auf diese Weise wird im Kraftstoff-Fördermodul sichergestellt, daß dort immer ein konstanter Systemdruck vorliegt.

Andererseits ist es wiederum bekannt, daß ein Kraftstoff-Fördermodul nicht mit einem konstanten Systemdruck betrieben wird. Vielmehr wird der Systemdruck elektronisch geregelt. Die Elektrokraftstoffpumpe ist dazu mit einem Steuergerät verbunden, welches wiederum aus der Kraftstoffversorgungsleitung mittels eines Drucksensors Informationen über den Kraftstoffstrom erhält. Über ein Taktmodul steuert das Steuergerät die Elektrokraftstoffpumpe an und ist durch Veränderung der Drehzahl der Elektrokraftstoffpumpe in der Lage, den Druck im Kraftstoff-Fördermodul an den Bedarf anzupassen.

Aus US 4 543 935 A ist ein Kraftstoffdruckregler bekannt, der ein Ventil zwischen dem Kraftstoffeinlass und dem Kraftstoffauslass, sowie zwei Membranen aufweist. Eine der zwei Membranen kann, zwecks Druckverstärkung, mit Druckluft beaufschlagt werden.

Aus JP 02 136561 A ist ein Druckregelventil bekannt, das ein lastabhängig verstellbares Federelement aufweist. Dieses Federelement steuert die Ventilöffnungskraft in Abhängigkeit von der Last.

Aus EP 0 585 810 A ist weiter ein Druckregler mit einem Hauptgehäuse und einem Nebengehäuse bekannt, wobei das Hauptgehäuse mit einem Einlass und einem Auslass sowie mit einem zwischen Einlass und Auslass angeordneten Ventilsitz versehen ist, und wobei das an dem Hauptgehäuse befestigte Nebengehäuse eine Reglerfeder trägt und zwischen dem Gehäuse eine Membranventilanordnung liegt, die ein Kugelventil 80 umfasst.

Weiterhin ist aus US 5 706 785 A ein Kraftstoffversorgungssystem für eine Verbrennungskraftmaschine bekannt. Dieses Kraftstoffversorgungssystem umfasst einen Kraftstofftank, eine Kraftstoffpumpe, einen Kraftstoffdruckregler und einen Druckminderer, wobei der Druckminderer stromab hinter dem Kraftstoffdruckregler angeordnet ist.

Schließlich ist aus US 4 426 978 A ein Kraftstoffregelsystem für eine Verbrennungskraftmaschine bekannt, bei der Steuermittel für eine Elektrokraftstoffpumpe vorgesehen sind, um diese Elektrokraftstoffpumpe in Abhängigkeit von dem Kraftstofffluss zu steuern, der von der Verbrennungskraftmaschine zu dem Kraftstofftank zurückgeleitet wird.

### Vorteile der Erfindung

Das erfindungsgemäße Kraftstoff-Fördermodul für eine Benzindirekteinspeisung, das eine Elektrokraftstoffpumpe und ein mit einer Druckleitung der Elektrokraftstoffpumpe verbundenes Ventil mit einem ersten Raum aufweist, wobei durch den ersten Raum Kraftstoff von der Druckleitung zur Brennkraftmaschine hin strömen kann, hat als Ventil einen Kraftstoffdruckregler. Dieser Kraftstoffdruckregler erzeugt einen Zusatzdruck in dem ersten Raum. Dadurch gelingt es, dass im Startfall der Brennkraftmaschine das Kraftstoff-Fördermodul für die Benzindirekteinspeisung über einen bestimmten Zeitraum einen erhöhten Startdruck aufbringen kann. Im anschließenden Betriebszustand ist dieser erhöhte Startdruck jedoch nicht mehr nötig und kann entspannt werden. Auf diese Weise ist der Systemdruck an den jeweiligen Bedarf des Kraftstoff-Fördermoduls anpassbar. Weiterhin ist diese Lösung aufgrund der wenigen notwendigen Bauteile äußerst kompakt und benötigt daher auch nur sehr wenig Platz im Tankbereich. Weiterhin entfällt bei dieser Lösung eine technisch aufwendigere Steuerung der Elektrokraftstoffpumpe, so dass der Aufbau des Kraftstoff-Fördermoduls vereinfacht und kostengünstiger ausgeführt werden kann. Durch Konzentrierung auf wenige Bauteile ist diese Lösung wiederum von vornherein mit weniger möglichen Störquellen behaftet, wobei durch Aufbau des Kraftstoff-Fördermoduls nach einem Baukastenprinzip die jeweiligen Bauteile einfacher überprüft werden können. Weiterhin gestattet diese Lösung, Bauteile zu verwenden, die bekannt und ausgereift sind. Dadurch gelingt es, den Entwicklungsaufwand für das Kraftstoff-Fördermodul gering halten zu können.

Die in den Unteransprüchen aufgeführten Merkmale und Weiterbildungen sind vorteilhafte Ausgestaltungen, die die soeben angesprochenen Vorteile weiter unterstützen. Bevorzugt wird als Kraftstoffdruckregler ein Membranventil verwendet. Dieses hat einen ersten und einen zweiten Raum. Indem nun ein Druck im zweiten Raum erzeugt wird, wird dieser gleichzeitig auch im ersten Raum aufgeprägt und erzeugt auf diese Weise einen Zusatzdruck im Kraftstoff-Fördermodul. Anstatt des Membranventils sind aber auch andere Bauteile einsetzbar, die in der Lage sind, den Druck im ersten Raum zusätzlich zu erhöhen bzw. zu verringern, beispielsweise über einen Zylinder oder ähnliches.

### Ausführungsbeispiele

Weitere Vorteile, Merkmale und Ausgestaltungen werden anhand der nachfolgenden Zeichnungen näher erläutert. Es zeigen:
- Fig. 1: eine Prinzipskizze eines besonders bevorzugten Kraftstoff-Fördermoduls gemäß der Erfindung unter Verwendung einer Saugstrahlpumpe; und
- Fig. 2: eine weitere Prinzipskizze, die einen vereinfachten Aufbau des Kraftstoff-Fördermoduls aufzeigt.

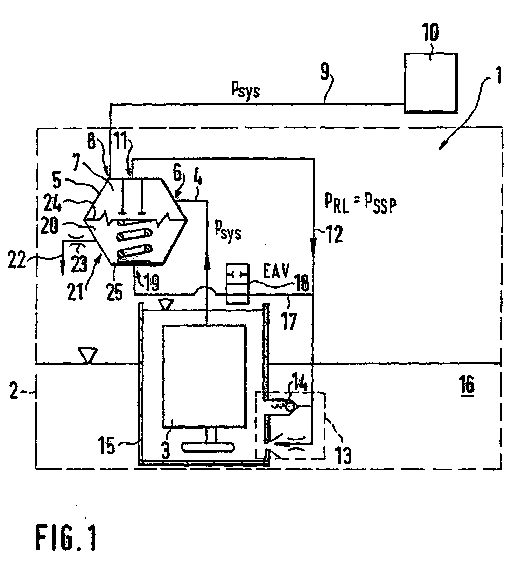

Fig. 1 zeigt ein Kraftstoff-Fördermodul 1, das zur Startdruckerhöhung bei einer Benzindirekteinspeisung eingesetzt werden kann. Das Kraftstoff-Fördermodul 1 ist in einem Tank 2 angeordnet. Das Kraftstoff-Fördermodul 1 hat eine Elektrokraftstoffpumpe 3. Von der Elektrokraftstoffpumpe 3 verläuft eine Druckleitung 4 zu einem Membranventil 5, wobei die Druckleitung 4 an einem Einlaß 6 in den ersten Raum 7 des Membranventils 5 mündet. Über einen ersten Auslaß 8 kann ein Kraftstoffstrom aus dem ersten Raum 7 über eine Kraftstoffzuleitung 9 zu einer Brennkraftmaschine 10 mit Benzindirekteinspeisung strömen. In der Druckleitung 4 wie auch in der Kraftstoffzuleitung 9 herrscht dabei der von der Elektrokraftstoffpumpe 3 aufgebrachte Systemdruck p_{sys}. Über einen zweiten Auslaß 11 wird Kraftstoff über eine Kraftstoffrückleitung 12 von einer geregelten Saugstrahlpumpe 13 angesaugt. Die Saugstrahlpumpe 13, die mittels eines Regelventils 14 geregelt wird, saugt bei der Rückführung des Kraftstoffes aus der Kraftstoffrückleitung 12 in ein Reservoir 15 des Kraftstoff-Fördermoduls 1 auch Kraftstoff 16 aus einem Bodenbereich des Tanks 2 an. Aus dem Reservoir 15 saugt dann wiederum die Elektrokraftstoffpumpe 3 denjenigen Kraftstoff an, der in die Druckleitung 4 strömt. Von der Kraftstoffrückleitung 12 verläuft eine Abzweigung 17 zu einem Ein-Aus-Ventil 18. Das Ein-Aus-Ventil 18 wiederum ist über einen ersten Anschluß 19 mit einem zweiten Raum 20 des Membranventils 5 verbunden. Weiterhin hat der zweite Raum 20 einen zweiten Anschluß 21, an dem eine Druckentlastungsleitung 22 angeschlossen ist. In der Druckentlastungsleitung wiederum befindet sich eine Drossel 23. Diese Drossel 23 und damit der zweite Anschluß 21 ist gesteuert verschließbar bzw. öffnet sich in Abhängigkeit von einer hier nicht näher dargestellten Steuerung. Das Membranventil 5 wiederum weist neben der Membran 24 auch eine Spiralfeder 25 auf. Diese ist im zweiten Raum 20 angeordnet und unterstützt die Membran 24 in ihrer Wirkung. Das Membranventil 5 mit Membran 24 und Spiralfeder 25 regelt mit diesen Mitteln den Systemdruck p_{sys} während des normalen Betriebszustandes der laufenden Brennkraftmaschine. Wird diese jedoch gestartet, wird in dem ersten Raum 7 ein Zusatzdruck erzeugt, indem das Ein-Aus-Ventil 18 den Druck p_{RL} aus der Kraftstoffrückleitung 12, der gleichzeitig der Ansaugdruck p_{SSP} der Saugstrahlpumpe 13 ist, über den ersten Anschluß 19 im zweiten Raum 20 auf der Federseite des Membranventils 5 zusätzlich aufprägt. Dadurch erhöht sich der Systemdruck p_{sys} um einen Betrag Δp. Soll der Systemdruck p_{sys} nach erfolgreichem Startvorgang auf einen niedrigeren Betriebsdruck reduziert werden, wird das Ein-Aus-Ventil 18 geschlossen und der Zusatzdruck über die Drossel 23 abgebaut. Bei dieser dargestellten Ausführung wird als Zusatzdruck der Ansaugdruck p_{SSP} der Saugstrahlpumpe 13 ausgenutzt, so daß ein zusätzliches Mittel zur Druckerzeugung für den Zusatzdruck entfällt.

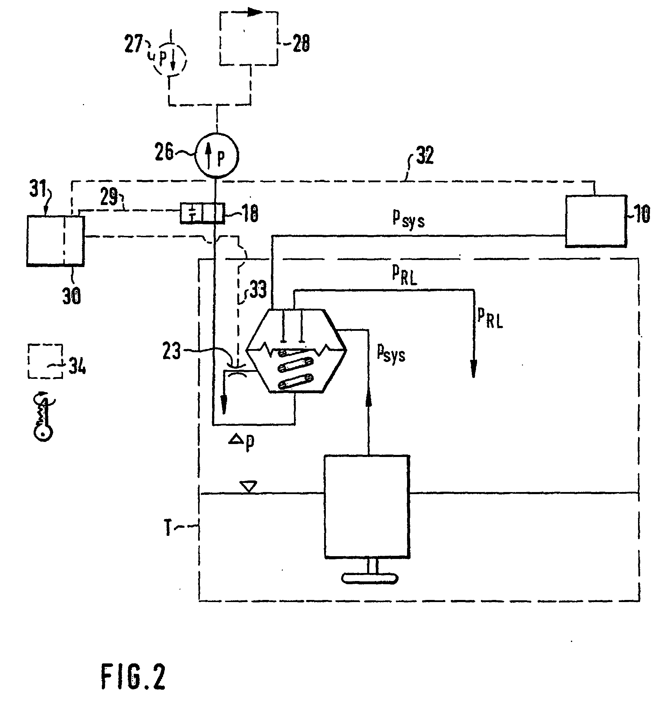

Bei dem folgenden Ausführungsbeispiel der Fig. 2 werden übereinstimmende Elemente aus Fig. 1 mit den gleichen Bezugszeichen versehen. Fig. 2 zeigt ein Ausführungsbeispiel des Kraftstoff-Fördermoduls 1, bei dem der Zusatzdruck nicht über eine Saugstrahlpumpe erzeugt wird. Dieses erfolgt vielmehr über eine Druckerzeugungseinrichtung 26, die an dem Ein-Aus-Ventil 18 angeschlossen ist. Die Druckerzeugungseinrichtung 26 kann eine Pumpe 27 oder eine Nieder- oder Hochdruck-Kreislaufleitung 28 des Kraftfahrzeuges sein. Beide Alternativen sind gestrichelt dargestellt. Das Ein-Aus-Ventil 18 ist über eine erste Leitung 29 mit einem Steuergerät 30 verbunden. Das Steuergerät 30 ist Teil einer Motorsteuerung 31, die über eine zweite Leitung 32 mit der Brennkraftmaschine 10 verbunden ist. Die Drossel 23 wiederum ist ebenfalls an das Steuergerät 30 über eine dritte Leitung 33 angeschlossen. Dadurch ist es möglich, daß das Ein-Aus-Ventil 18 wie auch die Drossel 23 über ein Steuergerät beeinflußbar sind. Das Ein-Aus-Ventil 18 kann elektrisch, pneumatisch, hydraulisch, mechanisch oder auf anderem Wege betätigt werden, wobei dessen Steuerimpulse abhängig von verschiedenen Motorparametern, wie Temperatur, Kraftstoff, Luftdruck usw., sein können. Gleiches gilt auch für die Steuerung der Drossel 23. Anstatt des Steuergerätes 30 ist jedoch ebenfalls der Einsatz eines Zeitgliedes 34 möglich, das gestrichelt angedeutet ist. Das Zeitglied 34 wird beispielsweise beim Drehen eines Zündschlüssels aktiviert und löst geeignete Steuerimpulse für die Drossel 23 bzw. das Ein-Aus-Ventil 26 aus. Auch auf diese Weise ist es möglich, daß das Ein-Aus-Ventil 18 nach dem Startvorgang wieder geschlossen wird, um den niedrigeren Betriebsdruck durch Abbau des Zusatzdruckes über die Drossel 23 zu erzielen.

## Patentansprüche

1. Kraftstoff-Fördermodul (1) für eine Benzindirekteinspeisung einer Brennkraftmaschine (10) eines Kraftfahrzeuges, aufweisend eine Elektrokraftstoffpumpe (3) und ein mit einer Druckleitung (4) der Elektrokraftstoffpumpe (3) verbundenes Ventil (5) mit einem ersten Raum (7), durch den Kraftstoff (16) von der Druckleitung zur Brennkraftmaschine (10) hin strömen kann, **dadurch gekennzeichnet, dass** das Ventil (5) ein Kraftstoffdruckregler ist, der einen Zusatzdruck (Δp) in dem ersten Raum (7) erzeugt, und dass der Kraftstoffdruckregler zwischen der Elektrokraftstoffpumpe (3) und der Brennkraftmaschine (10) angeordnet ist.

2. Kraftstoff-Fördermodul (1) nach Anspruch 1, **dadurch gekennzeichnet, daß** der Kraftstoffdruckregler ein Membranventil (5) ist.

3. Kraftstoff-Fördermodul (1) nach Anspruch 1 oder 2, **dadurch gekennzeichnet, daß** das Ventil (5) einen ersten Anschluß (19) zur Aufbringung des Zusatzdruckes (Δp) hat.

4. Kraftstoff-Fördermodul (1) nach Anspruch 1, 2 oder 3, **dadurch gekennzeichnet, daß** ein Ein-Aus-Ventil (18) den Zusatzdruck (Δp) steuert.

5. Kraftstoff-Fördermodul (1) nach Anspruch 4, **dadurch gekennzeichnet, daß** das Ein-Aus-Ventil (18) mit einem Steuergerät (30) verbunden ist.

6. Kraftstoff-Fördermodul (1) nach Anspruch 4, **dadurch gekennzeichnet, daß** das Steuergerät (30) eine Motorsteuerung (31) ist.

7. Kraftstoff-Fördermodul (1) nach einem der vorhergehenden Ansprüche, **dadurch gekennzeichnet, daß** eine Pumpe (27) zur Erzeugung des Zusatzdrucks (Δp) angeschlossen ist.

8. Kraftstoff-Fördermodul (1) nach einem der Ansprüche 1 bis 6, **dadurch gekennzeichnet, daß** der Kraftstoffdruckregler eine Verbindung zu einem Nieder- oder Hochdruckkreislauf (28) hat.

9. Kraftstoff-Fördermodul (1) nach einem der vorhergehenden Ansprüche, **dadurch gekennzeichnet, daß** das Ventil (5) einen zweiten Anschluß (21) als Auslaß hat.

10. Kraftstoff-Fördermodul (1) nach Anspruch 9, **dadurch gekennzeichnet, daß** an dem zweiten Anschluß (21) eine Drossel (23) angeordnet ist.

11. Kraftstoff-Fördermodul (1) nach Anspruch 9 oder 10, **dadurch gekennzeichnet, daß** der zweite Anschluß (21) gesteuert verschließbar ist.

12. Kraftstoff-Fördermodul (1) nach einem der vorhergehenden Ansprüche, **dadurch gekennzeichnet, daß** das Ventil (5) ein mit einer Spiralfeder (25) in einem zweiten Raum (20) unterstütztes Membranventil (5) ist, wobei im zweiten Raum (5) der erste (19) und der zweite (21) Anschluß münden.

## Claims

1. Fuel supply module (1) for feeding petrol directly to an internal combustion engine (10) of a motor vehicle, having an electric fuel pump (3) and a valve (5) which is connected to a pressure line (4) of the electric fuel pump (3) and has a first chamber (7) through which fuel (16) can flow from the pressure line to the internal combustion engine (10), **characterized in that** the valve (5) is a fuel pressure regulator which produces an additional pressure (Δp) in the first chamber (7), and **in that** the fuel pressure regulator is arranged between the electric fuel pump (3) and the internal combustion engine (10).

2. Fuel supply module (1) according to Claim 1, **characterized in that** the fuel pressure regulator is a diaphragm valve (5).

3. Fuel supply module (1) according to Claim 1 or 2, **characterized in that** the valve (5) has a first connection (19) for applying the additional pressure (Δp).

4. Fuel supply module (1) according to Claim 1, 2 or 3, **characterized in that** an on/off valve (18) controls the additional pressure (Δp).

5. Fuel supply module (1) according to Claim 4, **characterized in that** the on/off valve (18) is connected to a control device (30).

6. Fuel supply module (1) according to Claim 4, **characterized in that** the control device (30) is an engine controller (31).

7. Fuel supply module (1) according to one of the preceding claims, **characterized in that** a pump (27) for producing the additional pressure (Δp) is connected.

8. Fuel supply module (1) according to one of Claims 1 to 6, **characterized in that** the fuel pressure regulator has a connection to a low-pressure or high-pressure circuit (28).

9. Fuel supply module (1) according to one of the preceding claims, **characterized in that** the valve (5) has a second connection (21) as outlet.

10. Fuel supply module (1) according to Claim 9, **characterized in that** a throttle (23) is arranged at the second connection (21).

11. Fuel supply module (1) according to Claim 9 or 10, **characterized in that** the second connection (21) can be closed in a controlled manner.

12. Fuel supply module (1) according to one of the preceding claims, **characterized in that** the valve (5) is a diaphragm valve (5) which is supported by a helical spring (25) in a second chamber (20), the first connection (19) and the second connection (21) opening into the second chamber (5).

## Revendications

1. Module d'alimentation en carburant (1) pour une injection directe d'essence dans un moteur à combustion interne (10) de véhicule automobile, présentant une pompe à carburant électrique (3) et une soupape (5) reliée à une conduite de pression (4) de la pompe à carburant électrique (3), soupape qui comprend une première chambre (7) à travers laquelle du carburant (16) peut s'écouler de la conduite de pression au moteur à combustion interne (10),
**caractérisé en ce que**
la soupape (5) est un régulateur de pression de carburant qui produit une pression additionnelle (Δp) dans la première chambre, et le régulateur de pression de carburant est disposé entre la pompe à carburant électrique (3) et le moteur à combustion interne (10).

2. Module (1) selon la revendication 1,
**caractérisé en ce que**
le régulateur de pression de carburant est une soupape à membrane (5).

3. Module (1) selon la revendication 1 ou 2,
**caractérisé en ce que**
la soupape (5) comprend un premier raccord (19) pour l'application de la pression additionnelle (Δp).

4. Module (1) selon la revendication 1, 2 ou 3,
**caractérisé en ce qu'**
une soupape tout ou rien (18) commande la pression additionnelle (Δp).

5. Module (1) selon la revendication 4,
**caractérisé en ce que**
la soupape tout ou rien (18) est reliée à un appareil de commande (30).

6. Module (1) selon la revendication 4,
**caractérisé en ce que**
l'appareil de commande (30) est une commande de moteur (31).

7. Module (1) selon une des revendications précédentes,
**caractérisé en ce qu'**
une pompe (27) pour la production d'une pression additionnelle (Δp) est raccordée.

8. Module (1) selon une des revendications 1 à 6,
**caractérisé en ce que**
le régulateur de pression de carburant a une liaison avec un circuit de basse pression ou de haute pression (28).

9. Module d'alimentation de carburant (1) selon une des revendications précédentes,
**caractérisé en ce que**
la soupape (5) possède comme sortie un deuxième raccord (21).

10. Module (1) selon la revendication 9,
**caractérisé en ce qu'**
un étranglement (23) est disposé au deuxième raccord (21).

11. Module (1) selon la revendication 9 ou 10,
**caractérisé en ce que**
le deuxième raccord (21) peut être fermé de façon commandée.

12. Module (1) selon une des revendications précédentes,
**caractérisé en ce que**
la soupape (5) est une soupape à membrane (5) assistée par un ressort hélicoïdal (25) dans une deuxième chambre (20), le premier (19) et le deuxième (21) raccords débouchant dans la deuxième chambre (20).
